# EUROPEAN PATENT APPLICATION

(11) **EP 2 071 942 A1**
(43) Date of publication of application: **24.06.2009**
(21) Application number: 08075929.3
(22) Date of filing: 10.12.2008
(51) Int. Cl.: A01K 7/00, A01K 7/02

(54) **Device for watering an animal**

(30) Priority: 20.12.2007 NL 1034850
(71) Applicant: Lely Patent N.V., 3147 PA Maassluis (NL)
(72) Inventor: Bruinen, Arnoldus Hendricus, 3147 PA Maassluis (NL)
(74) Representative: Corten, Maurice Jean F.M.

(57) **Abstract**

Drinking device (1) for offering a drink to an animal, comprising a drinking trough (11) for containing the drink and comprising means for cleaning the drink in the drinking trough, whereby the means for cleaning the drink comprise removing means (14) for automatically removing impurities from the drink being in the drinking trough. In this case, the drinking device may also comprise sensor means (18) for measuring a quantity which is characteristic of the degree of contamination of the drink.

## Description

The present invention relates to a drinking device for offering a drink to an animal, comprising a drinking trough for containing the drink and comprising means for cleaning the drink in the drinking trough.

Such drinking devices, for example for cows, are known from GB2268828, WO99/05905, NL1011567, NL1012555, DE20300569U and EP1502500. These known drinking devices have as a common characteristic that the method of cleaning the drink in the drinking trough is based on the principle that at least a part of the contaminated drink is manually removed from the drinking trough and subsequently replaced by fresh, clean drink. For this purpose, the drinking troughs are provided with manually operated tilting devices. However, a first drawback of said known method and drinking devices is that cleaning of the drink in this manner is, both corporally and mentally, labour-intensive. A second drawback is that the cleaning of the drink entails relatively much loss of drink and correspondingly high cost for the supply of clean drink and the discharge of contaminated drink.

Therefore, it is inter alia an object of the present invention to provide a drinking device for an animal, which device can be cleaned in a manner that demands less labour and causes a smaller loss of drink.

For this purpose, a drinking device of the above-described type according to the invention is characterized in that the means for cleaning the drink comprise removing means for automatically removing impurities from the drink being in the drinking trough. Here, by the expression 'drink being in the drinking trough' is meant all the drink that is and may be present in the drinking trough. By the expression 'removing from the drink' is meant the physical separation of impurities from the drink. An advantage of such a drinking device is that cleaning of drink requires less labour and attention.

A compact drinking device is achieved if the removing means are provided in the drinking trough.

Preferably, the removing means comprise an inner trough for containing at least a part of the drink. The inner trough may, for example, be used for collecting sunk impurities.

Alternatively or additionally, the removing means comprise sweeping means for sweeping an inner wall of the drinking trough. Here, by the expression 'sweeping means' are meant means by which impurities can be detached from the wall and be displaced, such as brushing and scraping means. Sweeping means are advantageous to collecting sunk and/or caked impurities.

Preferably, the removing means are mounted so as to be movable. The movability of the removing means offers advantages upon collecting and removing impurities. A simple and reliable construction is achieved if the removing means are mounted so as to be rotatable. In a preferred embodiment of the invention, the drinking trough has a longest wall and the axis of rotation of the removing means is substantially parallel to said longest wall. As an alternative, the inner wall of the drinking trough has the shape of a part of a cylinder and the axis of rotation substantially coincides with the axial line of said cylinder.

For the purpose of collecting impurities, the removing means preferably comprise filtering means. Here, by the expression 'filtering means' are meant all means that, at the same time, allow liquids to pass through and partially do not allow solids to pass through. By applying filtering means it is, for example, possible to collect impurities floating in the drink.

It may be advantageous for the removing means to comprise a non-return valve via which the drink can pass in one direction. By means of such a non-return valve it is, for example, possible to prevent drink from flowing over the edge of the drinking trough as a result of the motion of the removing means.

The drinking device is preferably provided with drive means for moving the removing means. A drinking device which is provided with supply means for supplying drink to the drinking trough may, for this purpose, comprise a hydraulic motor which is drivable by the drink supplied. Alternatively or additionally, the drinking device comprises an electric motor or a pneumatic cylinder as a drive means for driving the removing means. In the case of transmission of a moment of force from the drive means to the removing means, the drinking device may be provided with deceleration means.

Drinking devices provided with removing means that are provided outside the drinking trough also form part of the invention. An advantage of this embodiment is that the removing means are easily accessible in the case of, for example, maintenance activities. An automatic closing device at the lower side of the drinking trough is a cheap and compact exemplary embodiment thereof.

A drawback of known drinking devices is that objective information about the degree of contamination of the drink is not available, so that the cleaning intensity is not optimally attuned to the degree of contamination. In order to obviate this drawback, the drinking device according to the present invention may comprise sensor means for measuring a quantity which is characteristic of the degree of contamination of the drink. Preferably, the sensor means measure a quantity which is characteristic of the clearness of the drink.

According to the invention, the drinking device is provided with operating means for operating the removing means. Preferably, the operating means are remotely operable. The invention also provides an intelligent operation for the drinking device, wherein the removing means are controlled by the sensor means. There may thus be reached an optimum balance between the purity of the drink and the amount of drink which is lost in order to achieve this purity.

The invention will be illustrated hereinafter by way of example with reference to exemplary embodiments of a device for watering an animal, shown in the drawing, in which:
Figure 1 is a first exemplary embodiment of a drinking device according to the invention;
Figure 2 is a second exemplary embodiment of a drinking device according to the invention;
Figure 3 and Figure 4 are a third exemplary embodiment of the drinking device according to the invention.

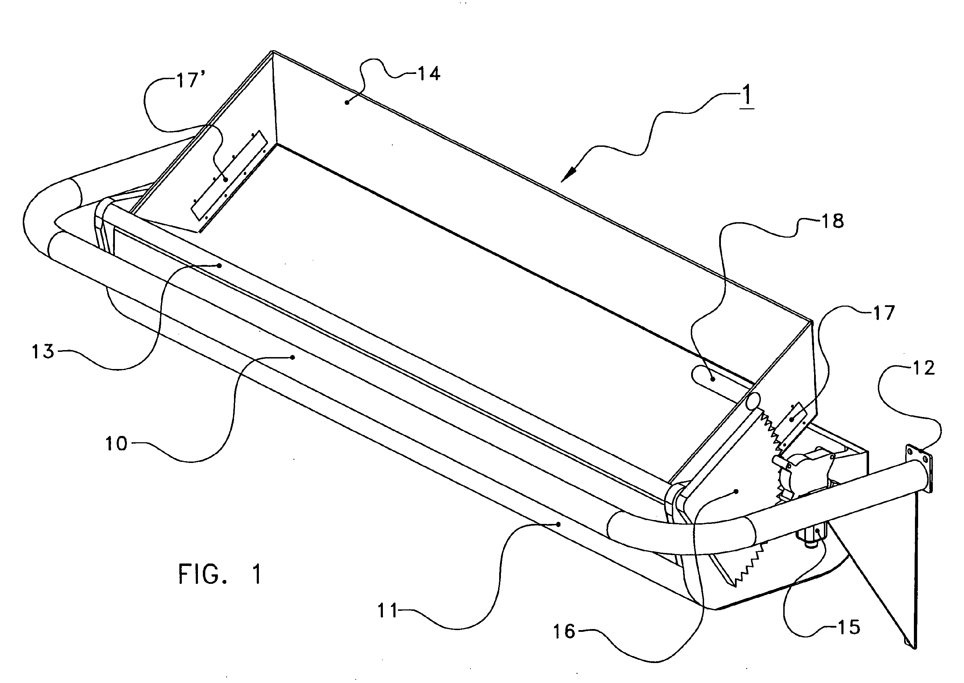

Figure 1 is a diagrammatic perspective view of a first exemplary embodiment of a drinking device 1 according to the invention, comprising removing means 14, 17, 17' which are mounted in the drinking trough 11. The drinking device 1 comprises a frame 10 and a drinking trough 11 for containing a drink. On the frame 10 there may be provided facilities 12 for mounting the drinking device 1 to a constructional building element, such as a floor, a wall or a beam, of, for example, a shed. The frame 10 may also serve as a protection for vulnerable components of the drinking device 1. In the first embodiment of the drinking device according to the invention, the drinking trough 11 is provided with an inner trough 14 which pivots about a pivot axis 13, the pivot axis 13 being parallel to a long side of the drinking trough 11. The drinking device 1 comprises drive means for the pivotal movement of the inner trough 14. Although an electric motor 15 is used in the exemplary embodiment described, the invention is, for example, also applicable while using a pneumatic or hydraulic motor. The invention is also applicable while using linear drive means, such as an electric, hydraulic or pneumatic cylinder. For the transmission of a moment of force to the inner trough 14, the drinking device 1 may be equipped with transmission means, such as a winch, lever, or gearwheel 16. The transmission means may also comprise deceleration means, for example in the form of a set of co-operating gearwheels. In addition to obvious energy sources, such as electric potential, air pressure and hydraulic oil pressure, the energy required may also be supplied by water pressure in a water supply system that is used for supplying water to the drinking device 1. For this purpose, the drinking device 1 may be provided with a known paddle wheel that is activated by water flowing in the water supply system during the supply of water to the drinking device 1. The wall of the inner trough is provided with filtering means 17, 17' for filtering the drink in the drinking trough 11.

Hereinafter the operation of the inner trough 14 as a removing means for automatically removing impurities from the drink being in the drinking trough 11 is explained in further detail. The pivotal movement of the inner trough 14 by the drive means may be subdivided into an upward movement and a downward movement. During the upward movement from the drinking trough 11, the drink flows from the space surrounded by the walls of the inner trough 14 into the space between the inner trough 14 and the inner walls of the drinking trough 11. In this case, at least a part of the drink passes the filtering means 17, 17', while at least a part of the impurities present in said drink remains behind in the inner trough 14. Near the end of the upward movement, a rest of drink flows from the inner trough 14, together with the impurities present therein, via a wall of the inner trough 14, over the edge of the drinking trough 11. During the downward movement, a part of the drink flows in opposite direction, via the filtering means 17, 17', back into the inner trough 14. In order to prevent drink from flowing over the edges of the drinking trough 11 during the downward movement, the inner trough 14 may be provided with a non-return valve (not shown) that allows drink to flow through during the downward movement and prevents drink to flow through during the upward movement. The activation of the drive means takes place automatically. For this purpose, the operating means for activating the drive means may be provided with a clock. In the embodiment in which the drive is ensured by flowing water, the inner trough 14 is driven during the supply of water to the drinking trough 11. The activation of the drive means may also take place on the basis of a signal from a sensor 18 which measures a quantity that is characteristic of the degree of contamination of the drink in the drinking device 1. An intelligent drinking device is involved here. The sensor 18 is preferably located in the inner trough 14.

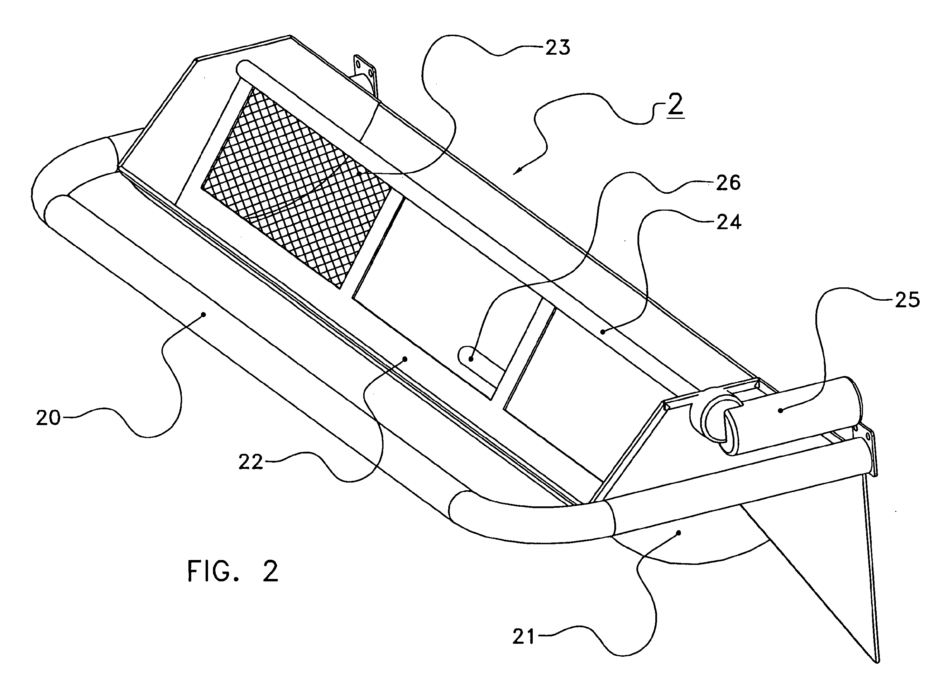

Figure 2 is a diagrammatic perspective view of a second exemplary embodiment of a drinking device 2 according to the invention. Also here, the drinking device 2 comprises a frame 20 and a drinking trough 21. The drinking trough 21 is provided with driven sweeping means 22 for automatically removing impurities from the drink being in the drinking trough 21. With the aid of the sweeping means 22 impurities are detached from a wall and displaced. Brushing and scraping means may form part of the sweeping means 22. The removing means may also comprise filtering means 23 and/or a non-return valve (not shown). The sweeping means 22 are mounted so as to be rotatable, the axis of rotation 24 extending parallel to a long side of the drinking trough 21. The drinking trough 21 has the shape of a part of a cylinder and the axis of rotation 24 coincides with the axial line of said cylinder. The drinking device 2 is provided with an electric motor 25. Operating means, drive means, transmission means and deceleration means as mentioned in the description of the first exemplary embodiment 1 may also be applied in this embodiment 2. The sweeping means 22 are capable of performing a pendulum motion, in which case impurities sunk and caked on the walls of the drinking trough 21 are swept to the edge of the drinking trough 21 and are led over the edge. By combining the sweeping means 22 with filtering means 23, impurities floating in the drink can also be removed from the drink. The drinking device according to the present embodiment may also comprise a sensor 26.

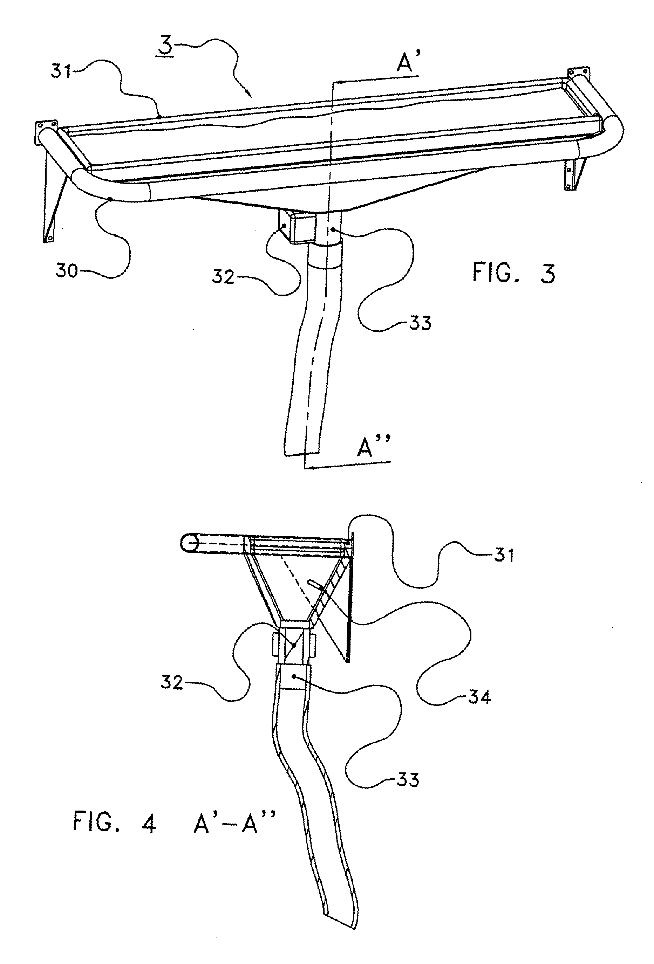

Figure 3 is a diagrammatic perspective view of a third exemplary embodiment 3 according to the invention, comprising a removing means which is provided outside the drinking trough. Figure 4 shows a cross-section thereof. Also here, the drinking device 3 comprises a frame 30 and a drinking trough 31. Here, the removing means consist of an automatically operated closing device 32 which is located in an outlet 33 of the drinking trough 31. Sunk impurities can thus be discharged from the drinking trough 31. For this purpose, the closing device 32 cooperates with the bottom of the drinking trough 31. The bottom of the drinking trough 31 is preferably funnel-shaped, which contributes to the displacement of sunk impurities to the outlet 33. It is possible for the closing device 32, periodically and whether or not controlled by sensor means, to open and close automatically during a short period of time. During the period of time when the closing device is opened, a part of the drink, together with an excess of impurities, flows from the drinking trough 31 via the outlet 33. The drinking device according to the present embodiment may also comprise a sensor 34.

## Claims

1. Drinking device (1, 2, 3) for offering a drink to an animal, comprising a drinking trough (11, 21, 31) for containing the drink and comprising means for cleaning the drink in the drinking trough, wherein the means for cleaning the drink comprise removing means for automatically removing impurities from the drink being in the drinking trough (11, 21, 31), **characterized in that** the removing means comprise an inner trough (14) for containing at least a part of the drink.

2. Drinking device (1, 2) according to claim 1, **characterized in that** the removing means are at least partially provided in the drinking trough (11, 21).

3. Drinking device (2) according to claim 1 or 2, **characterized in that** the removing means comprise sweeping means (22) for sweeping an inner wall of the drinking trough (21).

4. Drinking device (1, 2) according to any one of claims 1 - 3, **characterized in that** the removing means are mounted so as to be movable and/or rotatable.

5. Drinking device (1, 2) according to claim 4, wherein the drinking device (1, 2) has a longest wall, **characterized in that** the axis of rotation (13, 24) is substantially parallel to said longest wall.

6. Drinking device (2) according to claim 4 or 5, **characterized in that** an inner wall of the drinking trough (21) has the shape of a part of a cylinder, and the axis of rotation (24) substantially coincides with the axial line of said cylinder,

7. Drinking device (1, 2) according to any one of claims 1 - 6, **characterized in that** the removing means comprise filtering means (17, 17', 23) for filtering the drink, and/or a non-return valve via which the drink can pass in one direction.

8. Drinking device (1, 2) according to any one of claims 1 - 7, **characterized in that** the drinking device (1, 2) comprises drive means (15, 25) for moving the removing means.

9. Drinking device (1, 2) according to claim 8, wherein the drinking device (1, 2) is provided with supply means for supplying drink to the drinking trough (11,21), **characterized in that** the drive means comprise at least one of an electric motor (15, 25), a pneumatic cylinder, deceleration means (16) and a hydraulic motor which is drivable by the drink supplied.

10. Drinking device (3) according to any preceding claim, **characterized in that** the removing means are at least partially provided outside the drinking trough (31).

11. Drinking device (3) according to any preceding claim, **characterized in that** the removing means comprise an automatic closing device (32).

12. Drinking device (1, 2, 3) according to any preceding claim, **characterized in that** the drinking device (1, 2, 3) comprises sensor means (18, 26, 34) for measuring a quantity which is characteristic of the degree of contamination of the drink or the clearness of the drink.

13. Drinking device (1, 2, 3) according to any preceding claim, **characterized in that** the drinking device comprises operating means for operating the removing means.

14. Drinking device (1, 2, 3) according to claim 13, **characterized in that** the operating means are remotely operable.

15. Drinking device (1, 2, 3) according to claim 13 or 14, **characterized in that** the operating means are controllable by the sensor means (18, 26, 34).
